# EUROPEAN PATENT SPECIFICATION

(11) **EP 4 598 403 B1**
(45) Date of publication and mention of the grant of the patent: **18.02.2026**
(21) Application number: 24833937.6
(22) Date of filing: 16.12.2024
(51) Int. Cl.: A47J 31/06, A47J 31/36, A47J 31/42

(54) **AVOIDING DOUBLE DOSING IN A COFFEE MACHINE**
VERMEIDUNG VON DOPPELDOSIERUNG IN EINER KAFFEEMASCHINE
PROCÉDÉ POUR ÉVITER LE DOUBLE DOSAGE DANS UNE MACHINE À CAFÉ

(30) Priority: 18.12.2023 EP 23217747
(43) Date of publication of application: 13.08.2025
(73) Proprietor: Versuni Holding B.V., 1082 MD Amsterdam (NL)
(72) Inventor: WESTRUP, Geert Hendrik, 5656 AE Eindhoven (NL); PAPE, Gerdjan, 5656 AE Eindhoven (NL); MATTHIJSSEN, Tijn, 5656 AE Eindhoven (NL)
(74) Representative: Vollering, Stefanus Franciscus Maria
(86) International application number: PCT/EP2024/086505
(87) International publication number: WO 2025/132176

(56) References cited:
- WO-A1-2021/130384
- ES-A1- 2 373 898
- US-A1- 2017 119 195

## Description

### FIELD OF THE INVENTION

The invention relates to a coffee machine, comprising: a main unit comprising a main housing accommodating a ground coffee supply unit including a ground coffee outlet and a brew water supply unit including a brew water outlet; and a portafilter configured to be put to a functional condition in which the portafilter is removably combined with the main unit.

### BACKGROUND OF THE INVENTION

It is well known that coffee made from freshly ground beans gives better quality than pre-ground coffee. Often, fresh beans are used when making espresso coffee.

There are many different types of commercially available espresso coffee machine, for use in the home, or in bars, restaurants and hotels. The answer to the question which type of machine is appropriate in a particular setting depends on the expected amount of use, and of course also on the budget.

In a manually operated espresso machine, a user fills a coffee receiving vessel referred to as portafilter with coffee grounds. The user then tamps the coffee grounds in the portafilter with sufficient pressure, such as a pressure of about 200 N, to create a so-called puck in the portafilter. Subsequently, the user mounts the portafilter to the main unit of the coffee machine, usually through a bayonet-type of connection. The coffee machine is operated to drive hot water through the puck in the portafilter and the coffee that is obtained in this way is dispensed via a spout that is typically integrated in the portafilter. After brewing, the user needs to disconnect the portafilter from the main unit and empty the portafilter, throwing away the used coffee grounds. In a bar setting, the manual process is conducted by the barista. In a domestic setting, the manual process makes the user feel involved in the coffee making process, and hence provides the user with a feeling of performing the role of a barista.

Manually operated espresso machines with an integrated grinder are known in the art. In the case of such machines, a user is supposed to switch the portafilter between a first position relative to the main housing for receiving ground coffee and a second position relative to the main housing for brewing coffee. Tamping may be done manually or via a manually operated lever of the machine.

In a fully automatic espresso machine, all of the above-mentioned steps are done automatically, in one and the same machine. The machine comprises a bean container and a grinder to make the coffee grounds. These grounds are transported into a brew chamber and tamped automatically, by means of a piston that may be hydraulically or mechanically actuated such as by means of an electromotor. Next, hot water is driven through the coffee grounds in the brew chamber, coffee is brewed and dispensed in a receptacle, and the used coffee grounds are discharged from the brew chamber into a waste bin within the machine. Thus, in the case of fully automatic espresso machines, the manual steps required in the case of a manually operated espresso machine are removed, which saves time. Moreover, more uniform results are ensured.

A manually operated espresso machine can be produced at lower cost than a fully automatic espresso machine. Also, a manually operated espresso machine requires less maintenance than a fully automatic espresso machine, mainly because there is much less waste water in the drip tray and the coffee puck is removed after every coffee brewing action by the user. However, the results of using a manually operated espresso machine may be less uniform, due to the user involvement in the processes of filling the portafilter and tamping the coffee grounds in the portafilter into a puck. A fully automatic espresso machine gives more consistent results, but using a fully automatic espresso machine removes the barista feel associated with using a manually operated espresso machine. A fully automatic espresso machine generally is also more complex, more expensive, and bigger than a manually operated espresso machine.

A third type of coffee machine has been proposed, particularly a type which combines aspects from the manually operated espresso machine and the fully automatic espresso machine. In the present text, this third type of coffee machine is referred to as hybrid coffee machine. For example, US 9,125,519 B2 relates to a coffee machine that is equipped with a removable portafilter, and that also comprises a grinder at an interior position in the main unit of the coffee machine and configured to load the portafilter in the functional condition on the main unit with coffee powder from the top. Further, a lid or a plunger is present in the main unit to close the portafilter in the main unit and to tamp the coffee powder in the portafilter. The portafilter as closed by the lid or plunger functions as the brew chamber. After brewing, the emptying of the portafilter needs to be done manually again. Thus, an extensive mechanism as known from fully automatic espresso machines is omitted while the operating effort is not significantly increased compared to a need to periodically empty and clean a waste bin for the coffee grounds. The coffee machine may particularly comprise a distribution filter element that can be moved back and forth between a position in which the portafilter is open and can be filled with coffee powder and a second position in which the distribution filter element closes the portafilter in a pressure-tight manner. To move the distribution filter element between the first and second position an electrically or hydraulically operating drive unit can be used. The distribution filter element is embodied constructively for introducing the pressurized hot water into the portafilter and can also be useful for tamping the coffee powder as present in the portafilter into the necessary puck.

As mentioned, the hybrid coffee machine combines aspects from the manually operated espresso machine and the fully automatic espresso machine. In fact, as follows from the description of the hybrid coffee machine known from US 9,125,519 B2, the user of the hybrid coffee machine only needs to connect the empty portafilter to the main unit of the coffee machine. Grinding of the coffee beans, dosing of the ground coffee in the portafilter, and tamping of the ground coffee take place in an automated manner as in a fully automatic espresso machine, and also brew water delivery and coffee dispensing are fully automated actions. After brewing, the user needs to disconnect the portafilter from the main unit and discharge the coffee waste, similar to what is known from the context of manually operated espresso machines.

WO2021/130384A1 discloses a hybrid coffee machine of the afore-described type wherein the portafilter, in its functional condition, is displaceable relative to the main housing between a position in which the portafilter can receive ground coffee from a ground coffee outlet, and a position in which the portafilter can receive brew water from a brew water outlet.

Relating to a coffee machine comprising a main unit and a removable portafilter, and also a ground coffee supply unit and a brew water supply unit accommodated in a main housing of the main unit, the invention is in the field of hybrid coffee machines. It is an object of the invention to provide a coffee machine that can be easily and intuitively controlled by a user, and that has features which are functional to avoid situations in which a supply of ground coffee to the portafilter takes place while a used coffee puck is present in the portafilter, in other words, to avoid double dosing and thereby avoid spillage of coffee beans and bad coffee.

### SUMMARY OF THE INVENTION

The invention provides a coffee machine, comprising: a main unit comprising a main housing accommodating a ground coffee supply unit including a ground coffee outlet and a brew water supply unit including a brew water outlet; and a portafilter configured to be put to a functional condition in which the portafilter is removably combined with the main unit; wherein: the portafilter in the functional condition is displaceable relative to the main housing; with the portafilter at a first position relative to the main housing, the portafilter and the ground coffee outlet are at a relative position at which the portafilter is enabled to receive ground coffee from the ground coffee outlet; with the portafilter at a second position relative to the main housing, the portafilter and the brew water outlet are at a relative position at which the portafilter is enabled to receive brew water from the brew water outlet; and the coffee machine further comprises a blocking arrangement that is configured to allow the portafilter to be at the first position relative to the main housing only one time after having been combined with the main unit.

It follows from the above definition that in the coffee machine according to the invention, the portafilter in the functional condition is displaceable relative to the main housing. One position of the portafilter relative to the main housing is a first position relative to the main housing in which the portafilter and the ground coffee outlet are at a relative position at which the portafilter is enabled to receive ground coffee from the ground coffee outlet, while another position of the portafilter relative to the main housing is a second position relative to the main housing in which the portafilter and the brew water outlet are at a relative position at which the portafilter is enabled to receive brew water from the brew water outlet. The coffee machine further comprises a blocking arrangement that is configured to allow the portafilter to be at the first position relative to the main housing only one time after having been combined with the main unit.

When the portafilter is not in the functional condition, the portafilter is separate from the main unit. In view thereof, the portafilter is also referred to as exterior portafilter. Having the blocking arrangement in the coffee machine implies that each time after the portafilter has been put from the removed condition to the functional condition, there is only one opportunity to have the portafilter at the first position relative to the main housing. This means that the action of supplying ground coffee to the portafilter can take place only one time after the portafilter has been combined with the main unit. In this way, a situation in which a user accidentally moves the portafilter to the first position relative to the main housing after a coffee making process has been performed is avoided, so that it cannot happen that a fresh amount of ground coffee is deposited on top of a used puck. Also, this means that when the portafilter is blocked from reaching the first position relative to the main housing by the blocking arrangement, this situation can be changed by removing the portafilter from the main unit and putting the portafilter back to the functional condition. As handling the portafilter in this way is a user action, it can be expected that the user is triggered to empty the portafilter in the process. Thus, on the basis of the presence of the blocking arrangement in the coffee machine, it is achieved that the user is triggered to empty the portafilter in case the user forgets to remove the portafilter from the main unit after a coffee making process has taken place. This is far more safe than using some kind of warning mechanism configured to issue a warning that the portafilter should be removed from the main unit, as in such a case, it is possible for the user to ignore the warning.

The invention covers any suitable embodiment of the blocking arrangement. For instance, a path for the portafilter may be designed as a one-way or one-direction path, that allows passing of the portafilter in one direction only and blocks passing of the portafilter in the opposite direction. This may for instance be accomplished via a path having a ratchet type configuration. Alternatively or additionally, the path may be shaped as a closed loop, that can be passed by the portafilter in one direction only. For instance, the second position relative to the main housing may be the position at which the portafilter is initially combined with the main unit and at which the portafilter is removed from the main unit after the brew cycle is completed. The closed loop allows the portafilter to be displaced from said second position to the first position (the coffee receiving position) via a first path of the closed loop. After the portafilter has been filled with ground coffee at the first position, it may then be displaced to the second position (the brewing position) via a second path of the closed loop to complete the full loop. The portafilter then needs to be removed from the main unit and emptied before the portafilter can be displaced again to the first position via the first path of the closed loop.

According to embodiments of the invention, the blocking arrangement may comprise a blocking mechanism configured to mechanically block a path for the portafilter towards the first position relative to the main housing in an actuated condition and to leave the path open in a default condition. In this respect, the invention covers an option according to which the blocking arrangement comprises a biasing mechanism biasing the blocking mechanism to the default condition. Further, the invention covers an option according to which the blocking mechanism is configured to mechanically interact with the portafilter to assume the actuated condition when the portafilter is at the first position relative to the main housing or during movement of the portafilter away from the first position relative to the main housing. In the context of the invention, both a possibility of direct mechanical interaction of the blocking mechanism with the portafilter and a possibility of indirect mechanical interaction of the blocking mechanism with the portafilter are feasible. The latter may be applicable when use is made of a portafilter carrier for receiving and accommodating the portafilter in the functional condition. In any case, it is advantageous if the mechanical interaction of the blocking mechanism with the portafilter is triggered through movement of the portafilter.

The above-mentioned capability of the blocking mechanism to mechanically interact with the portafilter to assume the actuated condition when the portafilter is at the first position relative to the main housing or during movement of the portafilter away from the first position relative to the main housing can be realized in many ways. In one practical example, the blocking mechanism comprises a first member fixedly mounted to the main housing, and a second member and a third member configured to be movable along with the portafilter as the portafilter is displaced relative to the main housing, wherein the second member is configured to engage on the first member when the portafilter is displaced from the first position relative to the main housing to the second position relative to the main housing and to thereby hold the first member in a position in which movement of the third member in a direction related to the portafilter being moved from the second position relative to the main housing to the first position relative to the main housing is blocked by the first member, and wherein the second member is movable to release the first member under influence of the portafilter being removed from the main unit. In this configuration of the blocking mechanism, it may be so that the second position relative to the main housing is the position at which the portafilter is initially combined with the main unit and at which the portafilter is removed from the main unit. Further, it may be practical if the second member is normally at a position in which the second member is not capable of engaging on the first member, such as under the influence of biasing means such as a suitable spring arrangement, and is arranged such that it is achieved that the second member is moved away from that position when the portafilter is combined with the main unit.

As an alternative to the above-mentioned option according to which the blocking mechanism is configured to mechanically interact with the portafilter to assume the actuated condition when the portafilter is at the first position relative to the main housing or during movement of the portafilter away from the first position relative to the main housing, it is possible that the blocking arrangement comprises a setting mechanism configured to only set the actuated condition of the blocking mechanism when the portafilter is at the first position relative to the main housing or during movement of the portafilter away from the first position relative to the main housing. Such a setting mechanism comprises an electronic detection circuit configured to detect whether the portafilter is at the first position relative to the main housing, for example, which electronic detection circuit may include components such as a Hall sensor, an optical sensor and/or a microswitch. If that is the case, indeed, it may be so that the electronic detection circuit is further configured to detect whether the portafilter is present at the main unit, and that the setting mechanism is configured to set the default condition of the blocking mechanism if the portafilter is found to be absent.

In the context of the invention, it may be practical if the main unit is configured to receive the portafilter at a position relative to the main housing when the portafilter is put to the functional condition that is different from the first position relative to the main housing. For example, it is possible that the main unit is configured to receive the portafilter at the second position relative to the main housing when the portafilter is put to the functional condition, as suggested earlier. Displacement of the portafilter to the first position relative to the main housing is preferably done manually. Enabling manual displacement helps in providing the user with a barista experience and a feeling of being in control of the operation of the coffee machine. Also, if displacement of the portafilter from the second position relative to the main housing to the first position relative to the main housing is done manually, an actuated condition of the blocking mechanism is sensed by the user, who will then be inclined to remove the portafilter from the main unit as a natural response.

In an embodiment of the coffee machine according to the invention, a path for the portafilter between the first position relative to the main housing and the second position relative to the main housing is shaped like a circle segment. For example, the coffee machine is equipped with a curved guide track for the portafilter.

As suggested earlier, it is possible that the coffee machine according to the invention comprises a portafilter carrier configured to receive and accommodate the portafilter in the functional condition. Such a portafilter carrier may have a function in guiding the portafilter as the portafilter is displaced relative to the main housing. An advantage of having a portafilter carrier as mentioned is that the portafilter carrier can be designed with all the features that may be necessary to enable all positioning options and any other functionalities of the portafilter as desired so that there is no need to provide the portafilter itself with those features. As a result, the portafilter may be of simple, robust design, devoid of fragile or sensitive element(s) which might otherwise constitute a hindrance to using and manipulating the portafilter, especially when the portafilter is in the removed condition. Optionally, a releasable locking mechanism may be provided, configured to lock the portafilter in place on the portafilter carrier. The locking mechanism may for instance include a snap finger or a locking spring. Having such a locking mechanism may provide tactile feedback to a user, thus helping the user in knowing when the portafilter has been placed correctly in the portafilter carrier. The locking mechanism may also contribute to stability and safety.

During operation of the coffee machine for performing a coffee making process, an action of supplying ground coffee to the portafilter can be performed when the portafilter is at the first position relative to the main housing. In this respect, it is possible that the user is requested to activate the coffee machine in a separate step to perform the action, such as through pressing a button or interacting with a touch screen. Alternatively, it is possible that the coffee machine comprises an arrangement that is actuable under the influence of the portafilter being put to the first position relative to the main housing to initiate supply of ground coffee to the portafilter through the ground coffee outlet, in other words, it is possible that with the portafilter being at or approaching the appropriate position, namely the first position relative to the main housing, the action of supplying ground coffee to the portafilter is initiated automatically. To that end, the coffee machine may be equipped with a suitable sensor arrangement, e.g. a Hall sensor or an optical sensor. A purely mechanical arrangement such as a mechanical switch is also feasible.

After the action of supplying ground coffee to the portafilter has taken place, the portafilter is ready to be displaced from the first position relative to the main housing to the second position relative to the main housing. The coffee machine can be configured to only enable manual displacement of the portafilter, but it is also possible that the coffee machine comprises a driving mechanism configured to bring about at least part of displacement of the portafilter. In any case, once the portafilter is at the second position relative to the main housing, the actions of creating the coffee puck by tamping the ground coffee in the portafilter and supplying brew water to the puck can be performed. In this respect, it is possible that the user is requested to activate the coffee machine in at least one separate step to perform the actions, such as through pressing a button or interacting with a touch screen. Alternatively, it is possible that the coffee machine comprises an arrangement that is actuable under the influence of the portafilter being put to the second position relative to the main housing to initiate supply of brew water to the portafilter through the brew water outlet, and possibly also to initiate the preceding tamping action. In other words, it is possible that with the portafilter being at or approaching the appropriate position, namely the second position relative to the main housing, at least the action of brewing coffee at the position of the portafilter is initiated automatically. To that end, the coffee machine may be equipped with a suitable sensor arrangement, like aforementioned Hall sensor or optical sensor. A purely mechanical arrangement such as a mechanical switch is also feasible.

The coffee machine is devoid of components configured to enable automatic discharge of a used coffee puck from the portafilter. As explained earlier, the user is supposed to remove the portafilter from the main housing and empty the portafilter. An embodiment of the portafilter in which the portafilter comprises a filter basket and a handle extending outwardly from the filter basket is commonly known. By holding the portafilter at the position of the handle, the user is capable of manipulating the portafilter in a convenient and easy manner. This also applies to any user action as may be needed in displacing the portafilter in the functional condition relative to the main housing.

The invention covers any suitable design of the main unit for enabling the combination of the portafilter with the main unit and allowing displacement of the portafilter relative to the main housing. The main housing may include a docking area, in which case it may be practical if the docking area comprises a space for at least partially accommodating the filter basket of the portafilter in the functional condition.

Further practical options relating to the coffee machine according to the invention include the following: 1) the coffee machine comprises a closing and tamping system configured to close the portafilter and to provide tamping of ground coffee contained in the portafilter, and arranged to interact with the portafilter while or after the portafilter is displaced from the first position relative to the main housing to the second position relative to the main housing; the closing and tamping system may comprise a piston. The piston may comprise the brew water outlet. The piston may be hydraulically or mechanically actuated; and 2) the ground coffee supply unit comprises a grinder. The ground coffee supply unit may further comprise a coffee bean reservoir.

The above-described and other aspects of the invention will be apparent from and elucidated with reference to the following detailed description of a practical embodiment of a coffee machine comprising a main unit and a portafilter that is to be combined with the main unit for the purpose of realizing a coffee making process (in this description also referred to as brew cycle) by means of the coffee machine, and that is to be removed from the main unit after a coffee making process (brew cycle) has taken place.

### BRIEF DESCRIPTION OF THE DRAWINGS

The invention will now be explained in greater detail with reference to the figures, in which equal or similar parts are indicated by the same reference signs, and in which:
Figure 1 diagrammatically shows a perspective view of a coffee machine according to an embodiment of the invention, including a main unit and a portafilter, wherein a functional condition of the portafilter is illustrated;
Figure 2 illustrates how the portafilter is put to the functional condition and how the portafilter in the functional condition is displaced relative to a main housing of the main unit;
Figure 3 illustrates a hydraulic layout of the coffee machine;
Figure 4 diagrammatically shows a perspective view of a portion of the coffee machine including a portafilter carrier and a curved guide track;
Figure 5 diagrammatically shows a perspective view of the portion of the coffee machine shown in figure 4, with the portafilter at an insertion position relative to the main housing;
Figure 6 diagrammatically shows a perspective view of the portion of the coffee machine shown in figures 4 and 5, with the portafilter at a position relative to the main housing for receiving ground coffee from a coffee supply unit of the coffee machine;
Figure 7 diagrammatically shows a perspective view of a component of the coffee machine including the curved guide track;
Figure 8 diagrammatically shows a perspective view of the portafilter carrier;
Figures 9 and 10 diagrammatically show a perspective, partially sectional view of a portion of the coffee machine including components of a blocking arrangement that is actuable to prevent the portafilter from reaching the position relative to the main housing for receiving ground coffee from the coffee supply unit;
Figures 11-17 illustrate how the blocking arrangement works by showing successive steps of using the portafilter in the functional condition and displacing the portafilter relative to the main housing.

### DETAILED DESCRIPTION OF EMBODIMENTS

The invention relates to a coffee machine 100, and the figures show an embodiment of the coffee machine 100 and portions and components of the coffee machine 100 according to this embodiment, and also illustrate working principles of the coffee machine 100. The coffee machine 100 comprises a main unit 10 and a portafilter 20. The main unit 10 comprises a main housing 11 accommodating a ground coffee supply unit 30 including a ground coffee outlet 31 and a brew water supply unit 40 including a brew water outlet 41. In the present embodiment of the coffee machine 100, the ground coffee supply unit 30 further includes a coffee bean reservoir 32 and a grinder 33, and the brew water supply unit 40 includes a heater 42 and a fluid coupling 43 between the heater 42 and the brew water outlet 41, which will hereinafter be referred to as delivery fluid coupling 43. The heater 42 may be of any suitable type, such as a flow through heater, a thermoblock, a thick film heater, etc. and the delivery fluid coupling 43 may comprise a system of conduits. The brew water outlet 41 may be in the form of a suitable water delivery head arranged at an end of a conduit of the delivery fluid coupling 43, for example, which water delivery head may comprise a water distribution disc or the like.

The portafilter 20 is intended to be used in two conditions, namely a functional condition in which the portafilter 20 is removably combined with the main unit 10, and a removed condition in which the portafilter 20 is separate from the main unit 10. If a user of the coffee machine 100 intends to operate the coffee machine 100 for the purpose of making a coffee drink, it is necessary that the user takes action aimed at putting the portafilter 20 in the functional condition if the portafilter 20 is found to be in the removed condition. The portafilter 20 comprises a filter basket 21 and a handle 22 extending outwardly from the filter basket 21.

In the present embodiment, the coffee machine 100 further comprises a water reservoir 50, a flow meter 51, a pump 52, a fluid coupling 53 between the reservoir 50 and the flow meter 51, a fluid coupling 54 between the flow meter 51 and the pump 52, and a fluid coupling 55 between the pump 52 and the heater 42. Also, the coffee machine 100 comprises a controller 60 configured to control operation of the coffee machine 100.

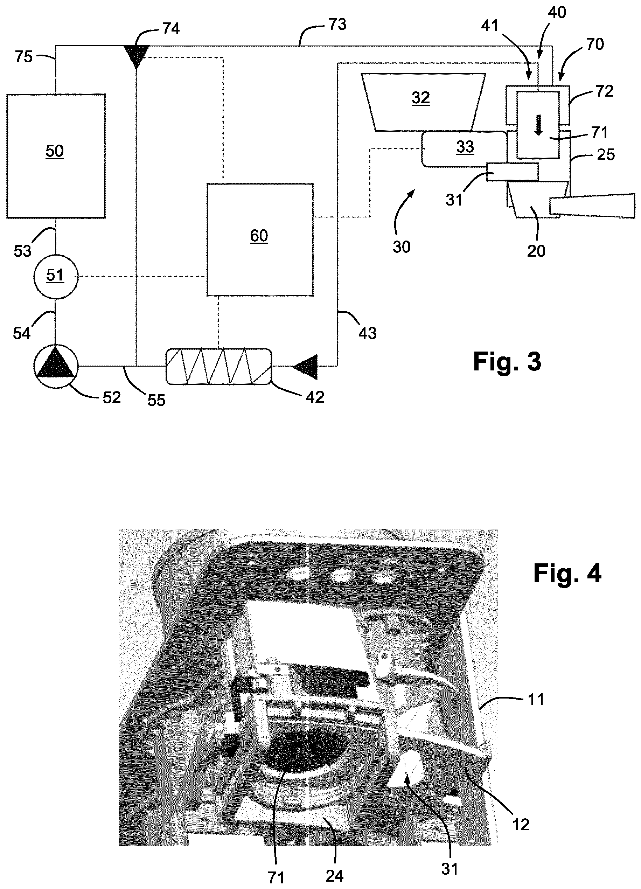

The pump 52 may be of any suitable type. The flow meter 51 is functional to provide a flow measurement to the controller 60, and the controller 60 is configured to control the heater 42 and the pump 52 on the basis of input from the flow meter 51 for the purpose of realizing a coffee making process in a proper manner. Alternatively, the flow meter 51 is omitted and dosing and flow rate control are done through appropriate control of the pump 52, such as by setting a power level and a pump time. In figure 3, control signals between the controller 60 and a number of components of the coffee machine 100 are represented through dashed lines.

The coffee machine 100 is designed such that when the portafilter 20 is in the functional condition, the portafilter 20 can be displaced between different positions relative to the main housing 11, including a position involving a relative position of the portafilter 20 and the ground coffee outlet 31 at which the portafilter 20 is enabled to receive ground coffee from the ground coffee outlet 31, and a position involving a relative position of the portafilter 20 and the brew water outlet 41 at which the portafilter 20 is enabled to receive brew water from the brew water outlet 41. For the sake of completeness, it is noted that in the above-described practical case of the portafilter 20 comprising a filter basket 21 and a handle 22, the filter basket 21 is the component of the portafilter 20 that is relevant in this respect. In the following, the first position of the portafilter 20/filter basket 21 relative to the main housing 11 will be referred to as coffee receiving position of the portafilter 20, and the second position of the portafilter 20/filter basket 21 relative to the main housing 11 will be referred to as brewing position of the portafilter 20. The coffee machine 100 of the shown embodiment is of the type comprising a closing and tamping system 70 for closing the portafilter 20/filter basket 21 when the portafilter is in the brewing position and for compacting ground coffee in the portafilter 20/filter basket 21 by means of a piston 71 that is arranged in a holder 72 so as to be movable in an up and down direction, and that is dimensioned to fit in the filter basket 21. In the shown example, the piston 71 is hydraulically connected to the pump 52 through a fluid coupling 73 and a valve 74 that may normally be closed and be opened when tamping is to take place. The valve 74 may be actively controlled by the controller 60 or may be a passive valve reacting to pressure. Further, a drain fluid coupling 75 may be present between the valve 74 and the water reservoir 50 to enable a return of water to the water reservoir 50 when the piston 71 is to be retracted. A downward movement of the piston 71 is indicated in figure 3 by an arrow. It is not essential that the piston 71 is hydraulically driven by the pump 52 that is present for the purpose of the coffee making functionality of the coffee machine 100, although this is practical in view of costs, and also compactness of the coffee machine 100. Alternatively, another way of driving the piston 71 may be applied, e.g. via a motor or a manually operable lever. An embodiment of the coffee machine 100 in which the piston 71 is also driven hydraulically, yet by means of a second pump is also feasible.

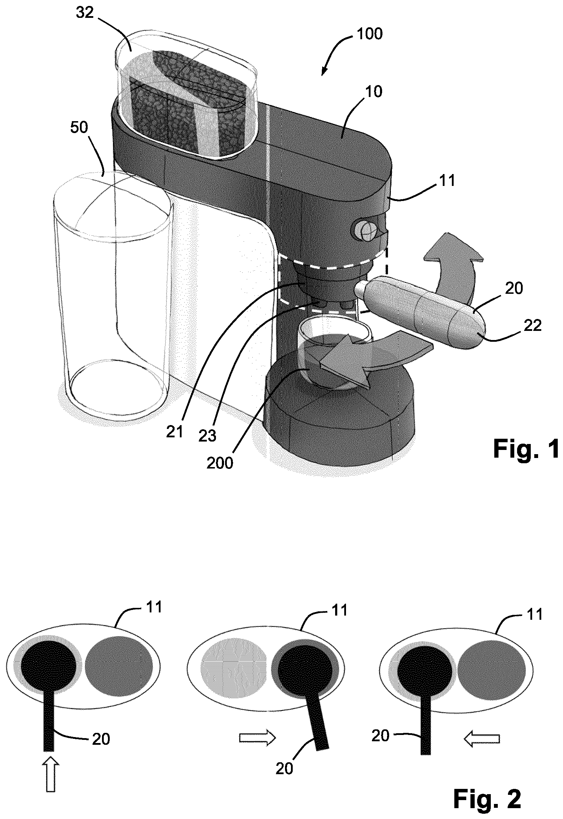

As mentioned, the portafilter 20 can be displaced between different positions relative to the main housing 11. In figure 2, the coffee receiving position of the portafilter 20 is shown in the centre of the figure, and the brewing position of the portafilter 20 is shown at the right side of the figure. Further, at the left side of figure 2, it is illustrated that the brewing position may also be a position at which the portafilter 20 is to be initially placed in/on the main unit 10 by the user. It may further be the position at which the portafilter 20 is to be removed from the main unit 10. At the left side of figure 2, a direction of placement of the portafilter 20 is indicated by an arrow. In the centre of figure 2, an arrow indicates a direction of displacement from the brewing position to the coffee receiving position, and at the right side of figure 2, an arrow indicates a direction of displacement from the coffee receiving position to the brewing position. In figure 1, a direction of displacement of the portafilter 20 from the brewing position to the coffee receiving position and the opposite direction of displacement of the portafilter 20 from the coffee receiving position to the brewing position are indicated by arrows. For the sake of clarity, a docking area of the main housing 11 for receiving and accommodating the portafilter 20 in the functional condition is not shown in figure 1 so that the portafilter 20 can be seen. Only a contour of the docking area is indicated by dashed lines.

In view of the foregoing, using the coffee machine 100 to make coffee involves the following actions:
- user actions aimed at ensuring that there is a sufficient quantity of coffee beans in the coffee bean reservoir 32, that there is a sufficient quantity of water in the water reservoir 50, and that the portafilter 20 is clean and does not contain any coffee residue,
- a user action aimed at ensuring that the portafilter 20 is in the functional condition and at the brewing position,
- a user action or an automated action aimed at putting the portafilter 20 from the brewing position to the coffee receiving position, wherein it is noted that in case a user action is applicable, this only requires taking hold of the handle 22 of the portafilter 20 and manipulating the handle 22 so that the portafilter 20 is made to move in the direction towards the coffee receiving position,
- a user action or an automated action of activating the ground coffee supply unit 30 to grind a quantity of coffee beans and supply the ground coffee thus obtained to the portafilter 20/filter basket 21 through the ground coffee outlet 31,
- a user action or an automated action aimed at putting the portafilter 20 filled with ground coffee from the coffee receiving position to the brewing position, wherein it is noted that in case a user action is applicable, this only requires taking hold of the handle 22 of the portafilter 20 and manipulating the handle 22 so that the portafilter 20 is made to move in the direction towards the brewing position,
- a user action or an automated action of activating the closing and tamping system 70 to close the portafilter 20/filter basket 21 in order to thereby create a brew chamber, and to compact the ground coffee in the portafilter 20, and
- a user action or an automated action of activating the pump 52 and, optionally, the heater 42 so that water is supplied in a pressurized and possibly heated condition to the brew chamber through the brew water outlet 41 so that a coffee brewing action takes place in the brew chamber.

As illustrated in figure 1, it is practical if the portafilter 20 is equipped with a lower spout 23 at the position of the filter basket 21 so that freshly brewed coffee may be dispensed directly from the portafilter to a receptacle 200 such as a cup or glass placed at a position underneath the portafilter 20.

The coffee machine 100 is devoid of components configured to enable automatic discharge of a used coffee puck from the portafilter 20. This means that the user is supposed to remove the portafilter 20 from the main unit 10 after the coffee making process has ended, and to empty and preferably clean the portafilter 20. The portafilter 20 may be provided with ejection means for easy removal of the used puck from the filter basket 21. Such ejection means are known per se.

Ease of use of the coffee machine 100 may be obtained if most or all of the above actions which can be automated actions are automated actions, indeed. The controller 60 can be programmed to execute an algorithm designed to realize those actions in a proper manner without a need for interference from the user. On the other hand, it is possible to have a high degree of user involvement in the operation of the coffee machine 100 if so desired. In this respect, it is noted that it is possible that the coffee machine 100 is designed to enable the user to set one of various operation modes of the coffee machine 100, each of the operation modes involving a different degree of user involvement. For the purpose of enabling the user to interact with the controller 60, it is practical if the coffee machine 100 comprises a user interface, which user interface may come in any suitable form such as one or more buttons on the main unit 10, a touchscreen on the main unit 10, an app on a smartphone for wireless communication with the controller 60, etc. Interaction of the user with the controller 60 may not only be useful for initiating actions during operation of the coffee machine 100 to realize a coffee making process, but also for indicating characteristics of the coffee and thereby making the controller 60 set appropriate operation values of the pump 52 and/or the heater 42, for example.

It may especially be desirable to let the action of putting the portafilter 20 from the brewing position to the coffee receiving position be a user action. Among other things, this may provide the user with a barista feel and with a sense of being in control of initiating the coffee making process. In fact, if said action is a user action, indeed, the portafilter 20 can have a user interface functionality, namely in case said action is used to automatically activate the ground coffee supply unit 30. The same is applicable to the action of putting the portafilter 20 filled with ground coffee from the coffee receiving position to the brewing position if this is a user action, namely in case said action is used to automatically activate closing and tamping system 70, the pump 52 and, optionally, the heater 42. If the action of putting the portafilter 20 filled with ground coffee from the coffee receiving position to the brewing position is a user action, indeed, it may be practical if the coffee machine 100 comprises an indicator such as a light that is operated by the controller 60 to indicate that the operation of the ground coffee supply unit 30 has ended. It is also possible that the fact that the grinder stops making sound when the operation of the ground coffee supply unit 30 ends is taken as an indication.

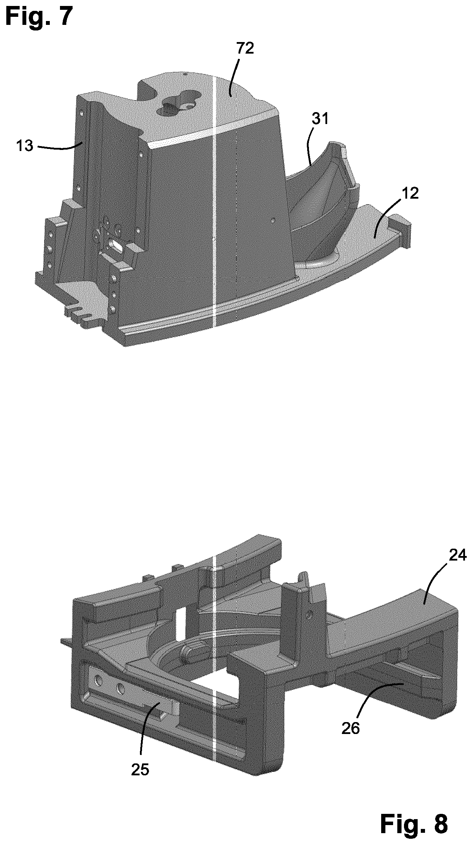

The action of displacing the portafilter 20 in the functional condition relative to the main housing 11 can easily be performed by the user and allows for intuitive control of the coffee machine 100 by the user. Complexity of design of the coffee machine 100 can be minimal, while the main unit 10 can be compact. In the present embodiment of the coffee machine 100, the portafilter 20 remains at the same level relative to the main housing 11 during displacement. With reference to figures 4-6, it is noted that use is made of a portafilter carrier 24 that is configured to accommodate and guide the portafilter 20 during displacement. The portafilter carrier 24 is slidably arranged on a guide track 12, which in the illustrated embodiment is curved. A component 13 of the coffee machine 100 including the curved guide track 12 is separately shown in figure 7, and the portafilter carrier 24 is separately shown in figure 8. In the illustrated embodiment, the component 13 shown in figure 7 includes the holder 72 of the piston 71 of the closing and tamping system 70, and the ground coffee outlet 31 in the form of a chute.

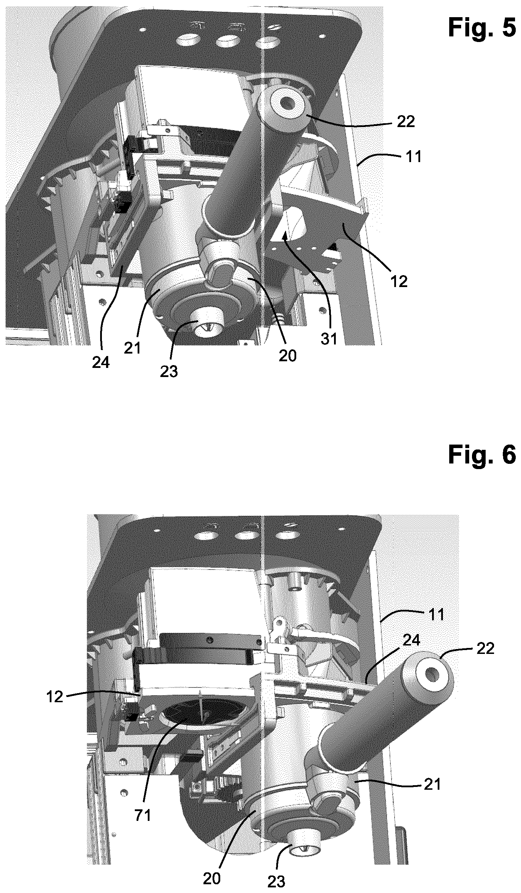

In figure 4, the portafilter carrier 24 is shown at a position for receiving the portafilter 20, i.e. at a position associated with the brewing position of the portafilter 20. In figure 5, the portafilter carrier 24 is shown at the same position, and the portafilter 20 as accommodated in the portafilter carrier 24 is shown as well. In figure 6, the portafilter 20 is shown at the coffee receiving position, and the portafilter carrier 24 is shown at a position associated with that particular position of the portafilter 20. As mentioned earlier, the portafilter carrier 24 is slidably arranged on a guide track 12, and in the case that displacement of the portafilter 20 relative to the main housing 11 is done manually, the user only needs to exert a small force on the portafilter 20 at the position of the handle 22 to put both the portafilter 20 and the portafilter carrier 24 in motion in the direction as desired, wherein the exact path followed by the portafilter 20 and the portafilter carrier 24 is dictated by the shape of the guide track 12, which in the illustrated embodiment is curved. Differently shaped guide tracks are feasible.

The portafilter carrier 24 as shown is configured to enable the portafilter 20 to be put in place in the portafilter carrier 24 by means of a linear sliding movement. For the purpose of holding the portafilter 20 in the desired position, the portafilter carrier 24 comprises a locking mechanism in the form of a locking spring 25 that is arranged to engage on the portafilter 20, wherein it is practical if the portafilter is provided with a recess in which an end of the locking spring 25 fits. Further, the portafilter carrier 24 is provided with opposite suspension ribs 26. In view thereof, it is practical if the portafilter 20 is provided with a groove for receiving the suspension ribs 26 when the portafilter 20 is put in place in the portafilter carrier 24. When the portafilter 20 is mounted in the portafilter carrier 24, the portafilter 20 hangs from the portafilter carrier 24, at a level underneath the curved guide track 12. In this way, a very stable positioning of the portafilter 20 is realized. The curved guide track 12 is provided with openings, wherein one of the openings serves to enable passage of ground coffee to the portafilter 20, and wherein the other of the openings serves to enable interaction of the portafilter 20 with the various components involved in closing the portafilter 20 so as to form the brew chamber, in tamping the ground coffee in the portafilter 20, and in supplying brew water to the portafilter 20.

The coffee machine 100 comprises a blocking arrangement 80 that is configured to allow the portafilter 20 to be in the coffee receiving position only one time after having been combined with the main unit 10. In that way, a situation in which the user accidentally moves the portafilter 20 to the coffee receiving position after a coffee making process has been performed is avoided. This helps preventing that a fresh amount of ground coffee is deposited on top of a used puck. Using the blocking arrangement 80 helps the user in realizing that the portafilter 20 needs to be removed from the main unit 10 and emptied.

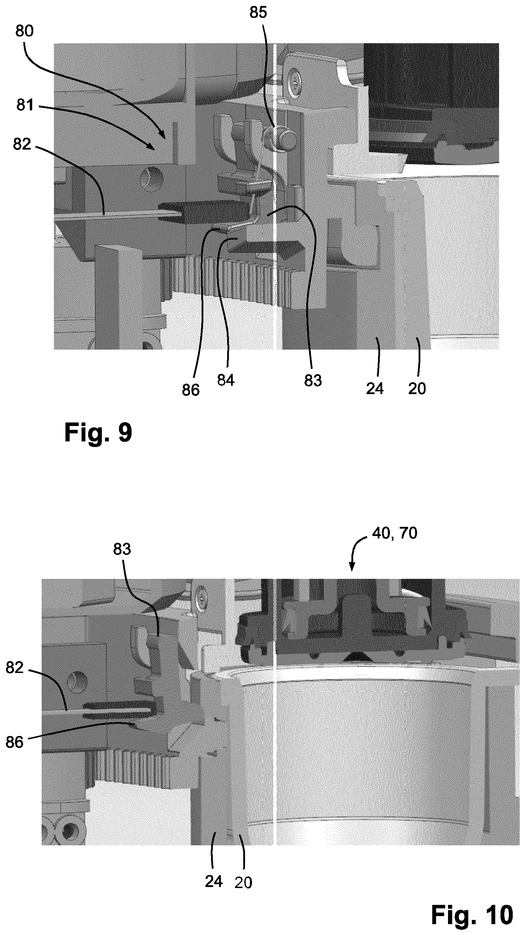

An embodiment of the blocking arrangement 80 is shown in figures 9-17. In the present example, the blocking arrangement 80 comprises a blocking mechanism 81. The blocking mechanism 81 comprises three main components, namely a first member in the form of a leaf spring 82 that is fixedly mounted to the main housing 11 at one end, a second member in the form of a retaining member 83 that is arranged on the portafilter carrier 24, and a third member in the form of a guide cam member 84 that is provided as an integrated part of the portafilter carrier 24, at a position close to the retaining member 83. As can be seen in figure 10, the retaining member 83 is arranged on the portafilter carrier 24 at the position of a hole in the portafilter carrier 24. A torsion spring 85 is used as a biasing means to push the retaining member 83 in an inward direction on the portafilter carrier 24. Thus, the default position of the retaining member 83 is a retracted position.

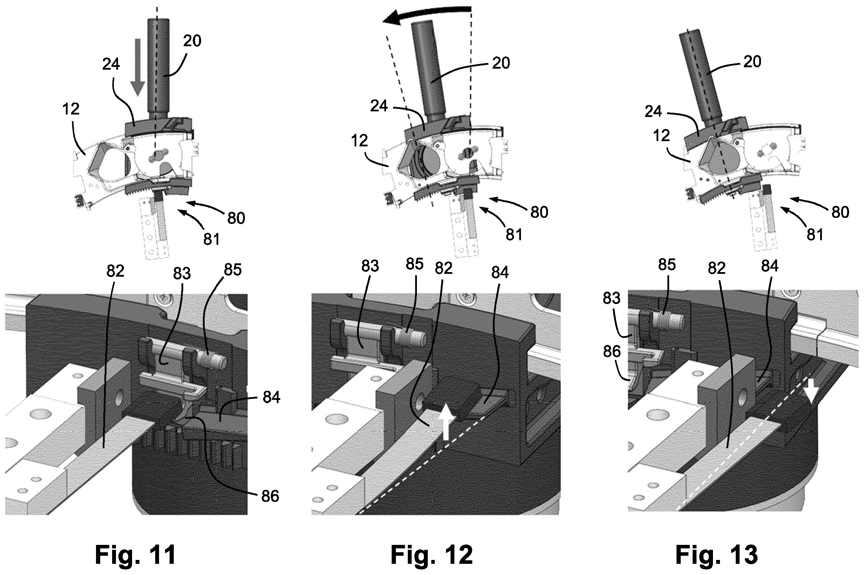

Figures 11-17 illustrate how the blocking arrangement 80 works by showing successive steps of using the portafilter 20 in the functional condition and displacing the portafilter 20 relative to the main housing 11. The order of the steps is the order that is normally associated with a coffee making process. In each of the figures, a position of the combination of the portafilter 20 and the portafilter carrier 24 is shown at the top, and an associated configuration of the blocking arrangement 80 is shown at the top as well and in enlarged and perspective view at the bottom.

Figure 11 illustrates a situation in which the portafilter 20 is put in place in the portafilter carrier 24. The direction of insertion of the portafilter 20 is indicated by an arrow. As a result of the portafilter 20 entering the portafilter carrier 24, the retaining member 83 is pushed from the default position to a more outward position, against the action of the torsion spring 85. In the process, a bottom projection 86 of the retaining member 83 slides underneath the free end of the leaf spring 82.

Figure 12 illustrates a situation in which the portafilter 20 is moved from the insertion position, which in the illustrated embodiment is the brewing position as explained earlier, in the direction of the coffee receiving position, as indicated by an arrow. In the process, the bottom projection 86 of the retaining member 83 is moved away from the free end of the leaf spring 82 and is followed by the guide cam member 84. Hence, the guide cam member 84 slides underneath the free end of the leaf spring 82. Due to the fact that a top surface of the guide cam member 84 has an inclination that is upward as seen in the direction towards the coffee receiving position, the free end of the leaf spring 82 is pushed in an upward direction as the guide cam member 84 advances underneath the free end of the leaf spring 82. In figure 12, a previous position of the leaf spring 82 is indicated by a dashed line, and the upward movement of the free end of the leaf spring 82 relative to that previous position is indicated by an arrow.

Figure 13 illustrates a situation in which the portafilter 20 is moved further and reaches the coffee receiving position. In the process, the guide cam member 84 is moved away from the free end of the leaf spring 82, as a result of which the free end of the leaf spring 82 springs back in a downward direction. In figure 13, a previous position of the leaf spring 82 is indicated by a dashed line, and the downward movement of the free end of the leaf spring 82 relative to that previous position is indicated by an arrow.

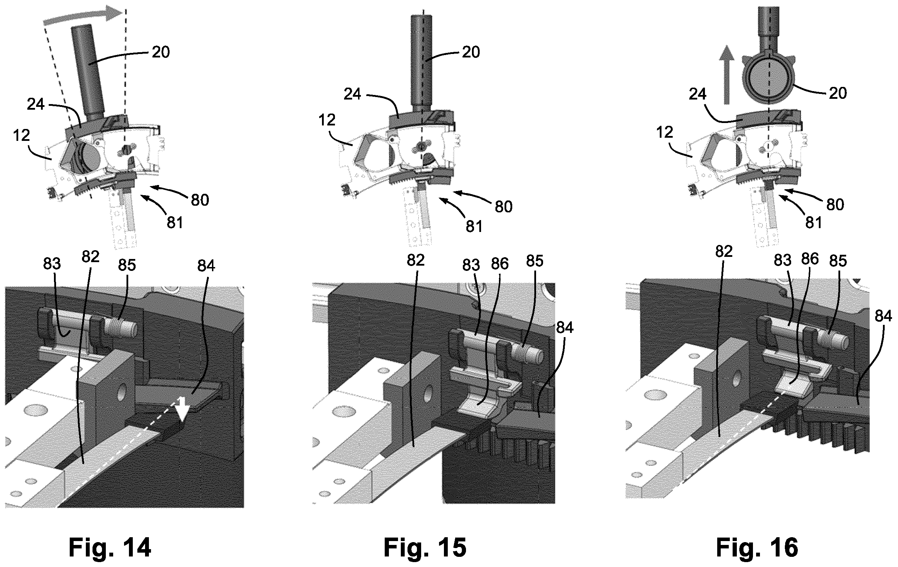

Figure 14 illustrates a situation in which the portafilter 20 is moved from the coffee receiving position in the direction of the brewing position, as indicated by an arrow. In the process, guide cam member 84 slides over the free end of the leaf spring 82. Due to the fact that a bottom surface of the guide cam member 84 has an inclination that is downward as seen in the direction towards the brewing position, the free end of the leaf spring 82 is pushed in a downward direction as the guide cam member 84 advances underneath the free end of the leaf spring 82. In figure 14, a previous position of the leaf spring 82 is indicated by a dashed line, and the downward movement of the free end of the leaf spring 82 relative to that previous position is indicated by an arrow.

Figure 15 illustrates a situation in which the portafilter 20 is moved further and reaches the brewing position. In the process, the guide cam member 84 is moved away from the free end of the leaf spring 82 and is followed by the bottom projection 86 of the retaining member 83. As a result of the interaction with the bottom surface of the guide cam member 84, the free end of the leaf spring 82 has been pushed down to such an extent that the bottom projection 86 of the retaining member 83 slides over the free end of the leaf spring 82. Hence, compared to the first instance of the portafilter 20 being in the brewing position, as illustrated in figure 11, a difference is found in the fact that the bottom proj ection 86 of the retaining member 83 is at a position above the free end of the leaf spring 82 instead of a position underneath above the free end of the leaf spring 82. This implies that the actuated condition of the blocking arrangement 80 has been set. The fact is that a movement of the portafilter 20 in the direction of the coffee receiving position is blocked as the free end of the leaf spring 82 is in the way of the guide cam member 84 in said direction. Attempts to move the portafilter 20 in the direction of the coffee receiving position fail because this makes the guide cam member 84 abut against the free end of the leaf spring 82. This is a way of guaranteeing that the portafilter 20 is removed from the main unit 10 after having been combined with the main unit 10 at the brewing position, and after having been moved to the coffee receiving position and back. It is expected that in the process of removing the portafilter 20 from the main unit 10, the user will take action of emptying the portafilter 20 as a result of noticing the used coffee puck in the portafilter 20.

Figure 16 illustrates a situation in which the portafilter 20 is removed from the main unit 10 and is thereby removed from the portafilter carrier 24. The direction of removal of the portafilter 20 is indicated by an arrow. As a result of the portafilter 20 exiting the portafilter carrier 24, the retaining member 83 is retracted to the default position under the influence of the action of the torsion spring 85. In the process, the free end of the leaf spring 82 is released and springs back in an upward direction, at which point the blocking mechanism 81 is reset to the default position. In figure 16, a position to be assumed by the leaf spring 82 in the process is indicated by a dashed line.

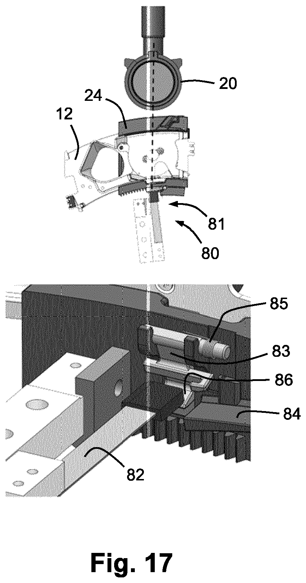

Figure 17 shows the end configuration of the blocking arrangement 80, which is also the start configuration of a new process of inserting the portafilter 20 and moving the portafilter 20 to the coffee receiving position and back. In this configuration, the retaining member 83 is kept in the default position by the leaf spring 82, and the free end of the leaf spring 82 is at a position at which the process as described earlier with reference to figure 11 can take place, namely the process of the bottom projection 86 of the retaining member 83 sliding underneath the free end of the leaf spring 82 when the retaining member 83 is pushed to the more outward position.

It follows from the foregoing that a coffee machine 100 is provided that is of the hybrid type, i.e. of the type comprising an internal grinder 33 and a brew chamber in the form of a portafilter 20 that is removably mounted to the main unit 10 and is emptied externally by the user, after each brew cycle, as part of the normal operation of the coffee machine 100. According to an aspect of the coffee machine 100 is that after there has been a first instance of the portafilter 20 being positioned at a coffee receiving position, the portafilter 20 is blocked from reaching the coffee receiving position again after having been moved from the coffee receiving position to a brewing position. To this end, the coffee machine 100 comprises a blocking arrangement 80. According to a feasible option, the blocking arrangement 80 comprises a blocking mechanism 81 configured to mechanically block a path for the portafilter 20 towards the coffee receiving position in an actuated condition and to leave the path open in a default condition. By allowing the portafilter 20 to be positioned at the coffee receiving position only one time after having been combined with the main unit 10, it is achieved that the chance that the coffee machine 100 is operated to supply ground coffee to the portafilter 20 while a used coffee puck from a previous coffee making process is still present in the portafilter 20 is minimized.

It will be clear to a person skilled in the art that the scope of the invention is not limited to the examples discussed in the foregoing, but that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details that are not required for understanding the invention may have been omitted, and not necessarily to scale.

Variations to the disclosed embodiments can be understood and effected by a person skilled in the art in practicing the claimed invention, from a study of the figures, the description and the attached claims. **In** the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

## Claims

1. A coffee machine (100), comprising:
a main unit (10) comprising a main housing (11) accommodating a ground coffee supply unit (30) including a ground coffee outlet (31) and a brew water supply unit (40) including a brew water outlet (41); and
a portafilter (20) configured to be put to a functional condition in which the portafilter (20) is removably combined with the main unit (10);
wherein:
the portafilter (20) in the functional condition is displaceable relative to the main housing (11);
with the portafilter (20) at a first position relative to the main housing (11), the portafilter (20) and the ground coffee outlet (31) are at a relative position at which the portafilter (20) is enabled to receive ground coffee from the ground coffee outlet (31);
with the portafilter (20) at a second position relative to the main housing (11), the portafilter (20) and the brew water outlet (41) are at a relative position at which the portafilter (20) is enabled to receive brew water from the brew water outlet (41); **characterized in that**
the coffee machine (100) further comprises a blocking arrangement (80) that is configured to allow the portafilter (20) to be at the first position relative to the main housing (11) only one time after having been combined with the main unit (10).

2. The coffee machine (100) as claimed in claim 1, wherein the blocking arrangement (80) comprises a blocking mechanism (81) configured to mechanically block a path for the portafilter (20) towards the first position relative to the main housing (11) in an actuated condition and to leave the path open in a default condition.

3. The coffee machine (100) as claimed in claim 2, wherein the blocking arrangement (80) comprises a biasing mechanism (85) biasing the blocking mechanism (81) to the default condition.

4. The coffee machine (100) as claimed in claim 2 or 3, wherein the blocking mechanism (81) is configured to mechanically interact with the portafilter (20) to assume the actuated condition when the portafilter (20) is at the first position relative to the main housing (11) or during movement of the portafilter (20) away from the first position relative to the main housing (11).

5. The coffee machine (100) as claimed in claim 4, wherein the blocking mechanism (81) comprises a first member (82) fixedly mounted to the main housing (11), and a second member (83) and a third member (84) configured to be movable along with the portafilter (20) as the portafilter (20) is displaced relative to the main housing (11), wherein the second member (83) is configured to engage on the first member (82) when the portafilter (20) is displaced from the first position relative to the main housing (11) to the second position relative to the main housing (11) and to thereby hold the first member (82) in a position in which movement of the third member (84) in a direction related to the portafilter (20) being moved from the second position relative to the main housing (11) to the first position relative to the main housing (11) is blocked by the first member (82), and wherein the second member (83) is movable to release the first member (82) under influence of the portafilter (20) being removed from the main unit (10).

6. The coffee machine (100) as claimed in claim 2 or 3, wherein the blocking arrangement (80) comprises a setting mechanism configured to only set the actuated condition of the blocking mechanism (81) when the portafilter (20) is at the first position relative to the main housing (11) or during movement of the portafilter (20) away from the first position relative to the main housing (11).

7. The coffee machine (100) as claimed in claim 6, wherein the setting mechanism comprises an electronic detection circuit configured to detect whether the portafilter (20) is at the first position relative to the main housing (11).

8. The coffee machine (100) as claimed in claim 7, wherein the electronic detection circuit is further configured to detect whether the portafilter (20) is present at the main unit (10), and wherein the setting mechanism is configured to set the default condition of the blocking mechanism (81) if the portafilter (20) is found to be absent.

9. The coffee machine (100) as claimed in any of claims 1-8, wherein the main unit (10) is configured to receive the portafilter (20) at a position relative to the main housing (11) when the portafilter (20) is put to the functional condition that is different from the first position relative to the main housing (11).

10. The coffee machine (100) as claimed in any of claims 1-9, wherein a path for the portafilter (20) between the first position relative to the main housing (11) and the second position relative to the main housing (11) is shaped like a circle segment.

11. The coffee machine (100) as claimed in any of claims 1-10, comprising a portafilter carrier (24) configured to receive and accommodate the portafilter (20) in the functional condition.

12. The coffee machine (100) as claimed in any of claims 1-11, comprising at least one of an arrangement that is actuable under the influence of the portafilter (20) being put to the first position relative to the main housing (11) to initiate supply of ground coffee to the portafilter (20) through the ground coffee outlet (31) and an arrangement that is actuable under the influence of the portafilter (20) being put to the second position relative to the main housing (11) to initiate supply of brew water to the portafilter (20) through the brew water outlet (41).

13. The coffee machine (100) as claimed in any of claims 1-12, comprising a driving mechanism configured to bring about displacement of the portafilter (20) from the first position relative to the main housing (11) to the second position relative to the main housing (11).

14. The coffee machine (100) as claimed in any of claims 1-13, comprising a closing and tamping system (70) configured to close the portafilter (20) and to provide tamping of ground coffee contained in the portafilter (20), and arranged to interact with the portafilter (20) as the portafilter (20) is displaced from the first position relative to the main housing (11) to the second position relative to the main housing (11).

15. The coffee machine (100) as claimed in any of claims 1-14, wherein the ground coffee supply unit (30) comprises a grinder (33).

## Patentansprüche

1. Kaffeemaschine (100), umfassend:
eine Haupteinheit (10), die ein Hauptgehäuse (11) umfasst, in dem sich eine Kaffeemehlzufuhreinheit (30), die einen Kaffeemehlauslass (31) beinhaltet und eine Brühwasserzufuhreinheit (40), die einen Brühwasserauslass (41) beinhaltet, befinden; und
einen Siebträger (20), der so konfiguriert ist, dass er in einen Funktionszustand versetzt werden kann, in dem der Siebträger (20) abnehmbar mit der Haupteinheit (10) kombiniert ist;
wobei:
der Siebträger (20) im Funktionszustand relativ zum Hauptgehäuse (11) verschiebbar ist;
wobei sich der Siebträger (20) in einer ersten Position relativ zum Hauptgehäuse (11) befindet, der Siebträger (20) und der Kaffeemehlauslass (31) sich in einer relativen Position befinden, in der der Siebträger (20) Kaffeemehl aus dem Kaffeemehlauslass (31) aufnehmen kann;
wobei sich der Siebträger (20) in einer zweiten Position relativ zum Hauptgehäuse (11) befindet, der Siebträger (20) und der Brühwasserauslass (41) sich in einer relativen Position befinden, in der der Siebträger (20) Brühwasser aus dem Brühwasserauslass (41) aufnehmen kann;
**dadurch gekennzeichnet, dass**
die Kaffeemaschine (100) weiter eine Blockieranordnung (80) umfasst, die so konfiguriert ist, dass sie es dem Siebträger (20) nur einmal ermöglicht, sich in der ersten Position relativ zum Hauptgehäuse (11) zu befinden, nachdem er mit der Haupteinheit (10) kombiniert wurde.

2. Kaffeemaschine (100) nach Anspruch 1, wobei die Blockieranordnung (80) einen Blockiermechanismus (81) umfasst, der dazu konfiguriert ist, in einem betätigten Zustand einen Weg für den Siebträger (20) in Richtung der ersten Position relativ zum Hauptgehäuse (11) mechanisch zu blockieren und in einem Standardzustand den Weg offen zu lassen.

3. Kaffeemaschine (100) nach Anspruch 2, wobei die Blockieranordnung (80) einen Vorspannmechanismus (85) umfasst, der den Blockiermechanismus (81) in den Standardzustand vorspannt.

4. Kaffeemaschine (100) nach Anspruch 2 oder 3, wobei der Blockiermechanismus (81) so konfiguriert ist, dass er mechanisch mit dem Siebträger (20) interagiert, um den betätigten Zustand einzunehmen, wenn sich der Siebträger (20) in der ersten Position relativ zum Hauptgehäuse (11) befindet oder während der Bewegung des Siebträgers (20) weg von der ersten Position relativ zum Hauptgehäuse (11).

5. Kaffeemaschine (100) nach Anspruch 4, wobei der Blockiermechanismus (81) ein erstes Element (82) umfasst, das fest am Hauptgehäuse (11) montiert ist, sowie ein zweites Element (83) und ein drittes Element (84), die so konfiguriert sind, dass sie zusammen mit dem Siebträger (20) beweglich sind, wenn der Siebträger (20) relativ zum Hauptgehäuse (11) verschoben wird, wobei das zweite Element (83) so konfiguriert ist, dass es am ersten Element (82) angreift, wenn der Siebträger (20) von der ersten Position relativ zum Hauptgehäuse (11) in die zweite Position relativ zum Hauptgehäuse (11) verschoben wird, und dadurch das erste Element (82) in einer Position hält, in der die Bewegung des dritten Elements (84) in eine Richtung, die mit der Bewegung des Siebträgers (20) von der zweiten Position relativ zum Hauptgehäuse (11) in die erste Position relativ zum Hauptgehäuse (11) zusammenhängt, durch das erste Element (82) blockiert wird, und wobei das zweite Element (83) beweglich ist, um das erste Element freizugeben (82) unter Einfluss des aus der Haupteinheit (10) entfernten Siebträgers (20).

6. Kaffeemaschine (100) nach Anspruch 2 oder 3, wobei die Blockieranordnung (80) einen Einstellmechanismus umfasst, der so konfiguriert ist, dass der betätigte Zustand des Blockiermechanismus (81) nur dann eingestellt wird, wenn sich der Siebträger (20) in der ersten Position relativ zum Hauptgehäuse (11) befindet oder während der Bewegung des Siebträgers (20) weg von der ersten Position relativ zum Hauptgehäuse (11).

7. Kaffeemaschine (100) nach Anspruch 6, wobei der Einstellmechanismus eine elektronische Erkennungsschaltung umfasst, die dazu konfiguriert ist, zu erkennen, ob sich der Siebträger (20) in der ersten Position relativ zum Hauptgehäuse (11) befindet.

8. Kaffeemaschine (100) nach Anspruch 7, wobei die elektronische Erkennungsschaltung ferner dazu konfiguriert ist, zu erkennen, ob der Siebträger (20) an der Haupteinheit (10) vorhanden ist, und wobei der Einstellmechanismus dazu konfiguriert ist, den Standardzustand des Sperrmechanismus (81) einzustellen, wenn festgestellt wird, dass der Siebträger (20) fehlt.

9. Kaffeemaschine (100) nach einem der Ansprüche 1-8, wobei die Haupteinheit (10) dazu konfiguriert ist, den Siebträger (20) in einer Position relativ zum Hauptgehäuse (11) aufzunehmen, wenn der Siebträger (20) in den Funktionszustand gebracht wird, der sich von der ersten Position relativ zum Hauptgehäuse (11) unterscheidet.

10. Kaffeemaschine (100) nach einem der Ansprüche 1-9, wobei ein Weg für den Siebträger (20) zwischen der ersten Position relativ zum Hauptgehäuse (11) und der zweiten Position relativ zum Hauptgehäuse (11) wie ein Kreissegment geformt ist.

11. Kaffeemaschine (100) nach einem der Ansprüche 1-10, die einen Siebträgerträger (24) umfasst, der dazu konfiguriert ist, den Siebträger (20) im Funktionszustand aufzunehmen und unterzubringen.

12. Kaffeemaschine (100) nach einem der Ansprüche 1-11, die mindestens eine Anordnung umfasst, die unter dem Einfluss des Siebträgers (20), der in die erste Position relativ zum Hauptgehäuse (11) gebracht wird, betätigbar ist, um die Zufuhr von gemahlenem Kaffee zum Siebträger (20) durch den Auslass für gemahlenen Kaffee (31) zu starten, und eine Anordnung, die unter dem Einfluss des Siebträgers (20), der in die zweite Position relativ zum Hauptgehäuse (11) gebracht wird, betätigbar ist, um die Zufuhr von Brühwasser zum Siebträger (20) durch den Brühwasserauslass (41) zu starten.

13. Kaffeemaschine (100) nach einem der Ansprüche 1-12, die einen Antriebsmechanismus umfasst, der dazu konfiguriert ist, eine Verschiebung des Siebträgers (20) aus der ersten Position relativ zum Hauptgehäuse (11) in die zweite Position relativ zum Hauptgehäuse (11) zu bewirken.

14. Kaffeemaschine (100) nach einem der Ansprüche 1-13, die ein Schließ- und Stopfsystem (70) umfasst, das so konfiguriert ist, dass es den Siebträger (20) schließt und für das Stopfpressen des im Siebträger (20) enthaltenen gemahlenen Kaffees sorgt, und das so angeordnet ist, dass es mit dem Siebträger (20) zusammenwirkt, wenn der Siebträger (20) aus der ersten Position relativ zum Hauptgehäuse (11) in die zweite Position relativ zum Hauptgehäuse (11) verschoben wird.

15. Kaffeemaschine (100) nach einem der Ansprüche 1-14, wobei die Kaffeemehlzufuhreinheit (30) eine Mühle (33) umfasst.

## Revendications

1. Machine à café (100), comprenant :
une unité principale (10) comprenant un boîtier principal (11) logeant une unité d'alimentation en café moulu (30) incluant une sortie de café moulu (31) et une unité d'alimentation en eau d'infusion (40) incluant une sortie d'eau d'infusion (41) ; et
un porte-filtre (20) configuré pour être mis dans un état fonctionnel dans lequel le porte-filtre (20) est combiné de manière amovible avec l'unité principale (10) ;
dans laquelle :
le porte-filtre (20) à l'état fonctionnel peut être déplacé par rapport au boîtier principal (11) ;
avec le porte-filtre (20) situé à une première position par rapport au boîtier principal (11), le porte-filtre (20) et la sortie de café moulu (31) se situent à une position relative à laquelle le porte-filtre (20) est autorisé à recevoir du café moulu depuis la sortie de café moulu (31) ;
avec le porte-filtre (20) situé à une seconde position par rapport au boîtier principal (11), le porte-filtre (20) et la sortie d'eau d'infusion (41) se situent à une position relative à laquelle le porte-filtre (20) est autorisé à recevoir de l'eau d'infusion depuis la sortie d'eau d'infusion (41) ;
**caractérisée en ce que**
la machine à café (100) comprend en outre un agencement de blocage (80) qui est configuré pour permettre au porte-filtre (20) de se trouver dans la première position par rapport au boîtier principal (11) une seule fois après avoir été combiné avec l'unité principale (10).

2. Machine à café (100) selon la revendication 1, dans laquelle le dispositif de blocage (80) comprend un mécanisme de blocage (81) configuré pour bloquer mécaniquement un trajet pour le porte-filtre (20) vers la première position par rapport au boîtier principal (11) dans un état actionné et pour laisser le trajet ouvert dans un état par défaut.

3. Machine à café (100) selon la revendication 2, dans laquelle l'agencement de blocage (80) comprend un mécanisme de sollicitation (85) sollicitant le mécanisme de blocage (81) vers l'état par défaut.

4. Machine à café (100) selon la revendication 2 ou 3, dans laquelle le mécanisme de blocage (81) est configuré pour interagir mécaniquement avec le porte-filtre (20) afin de passer à l'état actionné lorsque le porte-filtre (20) se situe dans la première position par rapport au boîtier principal (11) ou pendant le mouvement du porte-filtre (20) à distance de la première position par rapport au boîtier principal (11).

5. Machine à café (100) selon la revendication 4, dans laquelle le mécanisme de blocage (81) comprend un premier élément (82) monté fixement sur le boîtier principal (11) et un deuxième élément (83) et un troisième élément (84) configurés pour être mobiles avec le porte-filtre (20) lorsque le porte-filtre (20) est déplacé par rapport au boîtier principal (11), dans laquelle le deuxième élément (83) est configuré pour entrer en prise sur le premier élément (82) lorsque le porte-filtre (20) est déplacé de la première position par rapport au boîtier principal (11) à la seconde position par rapport au boîtier principal (11) et pour maintenir ainsi le premier élément (82) dans une position dans laquelle le mouvement du troisième élément (84) dans une direction par rapport au porte-filtre (20) étant déplacé de la seconde position par rapport au boîtier principal (11) à la première position par rapport au boîtier principal (11) est bloqué par le premier élément (82), et dans lequel le deuxième élément (83) est mobile pour libérer le premier élément (82) sous l'effet du porte-filtre (20) étant retiré de l'unité principale (10).

6. Machine à café (100) selon la revendication 2 ou 3, dans laquelle l'agencement de blocage (80) comprend un mécanisme de réglage configuré pour régler uniquement l'état actionné du mécanisme de blocage (81) lorsque le porte-filtre (20) se situe dans la première position par rapport au boîtier principal (11) ou pendant le mouvement du porte-filtre (20) à distance de la première position par rapport au boîtier principal (11).

7. Machine à café (100) selon la revendication 6, dans laquelle le mécanisme de réglage comprend un circuit de détection électronique configuré pour détecter si le porte-filtre (20) se situe dans la première position par rapport au boîtier principal (11).

8. Machine à café (100) selon la revendication 7, dans laquelle le circuit de détection électronique est configuré en outre pour détecter si le porte-filtre (20) est présent au niveau de l'unité principale (10), et dans laquelle le mécanisme de réglage est configuré pour régler l'état par défaut du mécanisme de blocage (81) si le porte-filtre (20) s'avère absent.

9. Machine à café (100) selon l'une quelconque des revendications 1-8, dans laquelle l'unité principale (10) est configurée pour recevoir le porte-filtre (20) à une position par rapport au boîtier principal (11) lorsque le porte-filtre (20) est placé à l'état fonctionnel qui est différent de la première position par rapport au boîtier principal (11).

10. Machine à café (100) selon l'une quelconque des revendications 1-9, dans laquelle un trajet pour le porte-filtre (20) entre la première position par rapport au boîtier principal (11) et la seconde position par rapport au boîtier principal (11) présente la forme d'un segment circulaire.

11. Machine à café (100) selon l'une quelconque des revendications 1-10, comprenant un support de porte-filtre (24) configuré pour recevoir et loger le porte-filtre (20) à l'état fonctionnel.

12. Machine à café (100) selon l'une quelconque des revendications 1-11, comprenant au moins un agencement qui peut être actionné sous l'effet du porte-filtre (20) étant placé dans la première position par rapport au boîtier principal (11) afin d'initier l'alimentation en café moulu du porte-filtre (20) par l'intermédiaire de la sortie de café moulu (31) et un agencement qui peut être actionné sous l'effet du porte-filtre (20) étant placé dans la seconde position par rapport au boîtier principal (11) afin d'initier l'alimentation en eau d'infusion du porte-filtre (20) par l'intermédiaire de la sortie d'eau d'infusion (41).

13. Machine à café (100) selon l'une quelconque des revendications 1-12, comprenant un mécanisme d'entraînement configuré pour provoquer le déplacement du porte-filtre (20) de la première position par rapport au boîtier principal (11) à la seconde position par rapport au boîtier principal (11).

14. Machine à café (100) selon l'une quelconque des revendications 1-13, comprenant un système de fermeture et de bourrage (70) configuré pour fermer le porte-filtre (20) et pour assurer le bourrage du café moulu contenu dans le porte-filtre (20), et agencé pour interagir avec le porte-filtre (20) lorsque le porte-filtre (20) est déplacé de la première position par rapport au boîtier principal (11) à la seconde position par rapport au boîtier principal (11).

15. Machine à café (100) selon l'une quelconque des revendications 1-14, dans laquelle l'unité d'alimentation en café moulu (30) comprend un moulin (33).
